# EUROPÄISCHE PATENTANMELDUNG

(11) **EP 4 043 161 A1**
(43) Veröffentlichungstag der Anmeldung: **17.08.2022**
(21) Anmeldenummer: 21156603.9
(22) Anmeldetag: 11.02.2021
(51) Int. Cl.: B25J 9/16

(54) **VERFAHREN ZUM KALIBRIEREN EINES ROBOTERARMS UND ROBOTERANORDNUNG MIT EINEM ROTOBERARM**

(71) Anmelder: Siemens Aktiengesellschaft, 80333 München (DE)
(72) Erfinder: Lupp, Friedrich, 82131 Gauting (DE); Regulin, Daniel, 81825 München (DE)

(57) **Zusammenfassung**

Die Erfindung betrifft ein Verfahren zum Kalibrieren eines Roboterarms (4) umfassend folgende Schritte,
- Bewegen eines Roboterarms (4) mit einem Messfinger (6) an ein Referenzobjekt (8),
- Messen eines Motorstroms mindestens eines Antriebsmotors (10) des Roboterarms (4)
- Vergleich des Motostroms (12) mit einem Schwellwert (14)
- Festlegen eines Koordinatensystems (16) mit einem Nullpunkt (18) an einer Position des Roboterarms (4), wenn der Motorstrom (12) den Schwellwert (14) überschreitet.

## Beschreibung

Die Erfindung betrifft ein Verfahren zum Kalibrieren eines Roboterarms nach dem Patentanspruch 1 sowie eine Roboteranordnung mit einem Roboterarm nach Patentanspruch 7.

Beim Handling und Bearbeiten von Werkstücken mithilfe eines oder mehrerer Roboter gibt es verschiedene Ursachen für auftretende Positionierungsungenauigkeiten. Diese können zum Beispiel Veränderungen der Positionierung durch einen Temperaturdrift, durch Verschleiß oder durch Veränderung der bewegten Massen sein. Sollen nun Werkstücke mit dem Roboter mit hoher Genauigkeit positioniert oder einem anderen Roboter übergeben werden, kommt es häufig zu Positionierungsproblemen, die auf mangelnde Positionierungsgenauigkeiten der Roboterarme zurückzuführen sind.

Um dies zu vermeiden, werden im Stand der Technik beispielsweise optische Hilfsmittel zum Positionieren oder zum Vermessen der Position der Roboterarme herangezogen. Auch die Kalibrierung eines Roboters bei vordefinierten Gewichtsbelastungen ist bekannt. Auch die Selbstkalibrierung von Robotern bezüglich Referenzobjekten mittels optischer Sensoren wird im Stand der Technik beschrieben. Der Nachteil aller beschriebenen Verfahren besteht darin, dass die Kalibrierung jeweils von verschiedenen Parametern, beispielsweise Gewichtsbelastung oder der Temperatur oder Verschleißerscheinungen, abhängig ist. Eine regelmäßige Nachkalibrierung mit einem hohen technischen und zeitlichen Aufwand, der die Produktion dabei für diese Zeit unterbricht, ist stets nötig. Zudem bedeutet jeder zusätzlich am Robotersystem angebrachte Sensor Mehrkosten und stellt weiterhin ein Bauteil dar, das Toleranzschwankungen unterliegt.

Die Aufgabe der Erfindung besteht darin, ein Verfahren zum Kalibrieren eines Roboterarms sowie einer Roboteranordnung mit einem Roboterarm bereitzustellen, die gegenüber dem Stand der Technik einem geringeren technischen Aufwand unterliegen und eine höhere Genauigkeit aufweist.

Die Lösung der Aufgabe besteht in einem Verfahren mit den Merkmalen des Patentanspruchs 1 sowie in einer Roboteranordnung mit den Merkmalen des Patentanspruchs 7.

Das erfindungsgemäße Verfahren zum Kalibrieren eines Roboterarms umfasst dabei folgende Schritte: Zunächst wird ein Roboterarm mit einem Messfinger an ein Referenzobjekt bewegt. Es wird dabei zumindest in der Annäherungsphase zwischen dem Mesfinger und dem Referenzobjekt ein Motorstrom eines mindestens einem Antriebsmotor des Roboterarms gemessen. Der gemessene Motorstrom wird mit einem Schwellwert verglichen, und wenn der Motorstrom den Schwellwert überschreitet, wird ein Nullpunkt eines Koordinatensystems festgelegt, an dem Ort, an dem sich der Roboterarm zu diesem Zeitpunkt befindet.

Dabei ist definitionsgemäß folgendes anzumerken: Die Festlegung des Nullpunktes erfolgt dabei bezüglich eines festgelegten Punktes des Roboterarmes. Sie muss nicht notwendigerweise am Ort des Messfingers erfolgen. Durch die Festlegung des Nullpunktes des Koordinatensystems an einem ausgehend von der nun bekannten Position des Messfingers kann auf die Positionierung und die Ausrichtung des Roboterarms rückgeschlossen werden kann. Der Schwellwert des Motorstroms ist in der Regel ein fester Schwellwert. Es kann jedoch auch ein Schwellwertverlauf bezüglich der Zeit sein. Dies würde einer Anstiegsrampe des Schwellwertes mit der Zeit entsprechen.

Das Messen des Motorstroms, bevorzugt durch eine entsprechende Motorsteuerung, die diese Messfähigkeiten in ihren Eigenschaften integriert hat, eignet sich somit dazu, mithilfe eines exakt positionierten Referenzobjektes die Position des Roboterarmes zu bestimmen. Dabei wird der Roboterarm ebenso an das Messobjekt herangefahren, dass der Messfinger, der bevorzugt dauerhaft am Roboterarm befestigt sein kann, mit den Referenzobjekt in einer bekannten bzw. vordefinierten (allerdings noch nicht kalibrierten) Lage in Berührung kommt. Dass die Berührung stattfindet und dass die Berührung auch mit dem entsprechenden Anpressdruck und somit mit einer genauen Positionierung einhergeht, kann mit dem festgelegten Schwellwert des Motorstromes genau bestimmt werden. Sobald der von einem Motor angetriebene Roboterarm gegen ein festes Hindernis, in diesem Fall das Referenzobjekt, fährt, erfolgt ein spontaner Anstieg des Motorstroms. Wenn der beschriebene Schwellwert überschritten wird, kann daraus abgeleitet werden, dass in einer bestimmten Richtung die bekannte Position des Referenzobjektes erreicht ist. In der Regel weist der Roboterarm mehrere Antriebsmotoren auf, wobei die Messung des Motorstromes auch für mehrere Antriebsmotoren zweckmäßig sein kann, sodass in dreidimensionaler Form die Position des Roboterarms abgeleitet werden kann. Die genaue Position des Motorarms kann aber gegebenenfalls mit erhöhtem Rechenaufwand grundsätzlich auch wie beschrieben mit der Motorstrommessung eines einzigen Antriebsmotors ermittelt werden.

In einer zusätzlichen vorteilhaften Ausgestaltungsform der Erfindung weisen die Geometrien des Referenzobjektes und des Messfingers jeweils mindestens zwei Referenzebenen auf. Zudem ist entweder der Messfinger oder das Referenzobjekt bezüglich einer Drehachse drehbar gelagert. Dadurch ist es möglich, dass bei einer formschlüssigen Berührung eines ersten Paares von Referenzebenen des Messfingers und des Referenzobjektes eine Drehung des Messfingers oder des Referenzobjektes erfolgt. Diese Drehung erfolgt so weit, bis eine formschlüssige Berührung des zweiten Referenzebenenpaares erfolgt ist. Dabei erfolgt gegebenenfalls noch eine zusätzliche translatorische Bewegung in Drehrichtung. Auf diese Art und Weise kann sowohl die Berührung in eine Richtung bezüglich des ersten Referenzebenenpaares sowie in eine andere Richtung im zweiten Referenzebenenpaar sowie über die Drehachsenpositionierung des Roboterarms genau bestimmt werden. Es kann somit also die Achsenposition und der Drehwinkel des Roboterarms kalibriert werden. Diese Kalibrierung erfolgt ohne die im Stand der Technik üblichen Sensoren. Es ist lediglich die Messung des Motorstroms notwendig, was messtechnisch in einfacher Form mittels verschiedener Steuerungen möglich ist.

Das beschriebene Verfahren kann ebenfalls angewandt werden, wenn die gegenseitige Kalibrierung der Positionen von zwei Roboterarmen notwendig ist. In diesem Falle ist es zweckmäßig, dass das Referenzobjekt nicht an einem festen Punkt im Raum, beispielsweise am Werktisch, befestigt ist, sondern dass das Referenzobjekt an dem zweiten Roboterarm angeordnet ist. Auf diese Weise kann durch das beschriebene Verfahren die jeweilige Positionierung beider Roboterarme und ihr Verhältnis zueinander festgelegt und kalibriert werden.

In einer weiteren Ausgestaltungsform der Erfindung ist ein zweiter Schwellwert des Motorstroms definiert, der niedriger liegt als der erste Schwellwert und der während einer Annäherungsphase des Messfingers an das Referenzobjekt unterschritten wird. Mit dem Begriff "unterschritten wird" ist gemeint, dass er während der Phase der Annäherung, in der Regel auch während des gesamten Betriebes, nicht überschritten wird. Solange dieser Schwellwert unterschritten bleibt, ist darauf zu schließen, dass keinerlei Berührung des Messfingers und des Referenzobjektes stattfindet. Sobald der zweite Schwellwert überschritten wird, ist davon auszugehen, dass eine Berührung bereits stattfindet und mit Erreichen des zweiten Schwellwertes die Berührung eine definierte Kraft aufweist, die wiederum bei bekannter Position des Referenzobjektes auf die genaue Position des Messfingers und somit des Roboterarmes schließen lässt. Ferner ist es dabei zweckmäßig, einen dritten Schwellwert zu definieren, der über dem ersten Schwellwert liegt und mit dessen Erreichen ein Stopp des Antriebsmotors verknüpft ist, um diesen nicht zu überlasten.

Der Messfinger ist bevorzugt am Roboterarm so angeordnet, dass herkömmliche Werkzeuge und deren Nutzung nicht gestört werden. Es ist somit möglich, den Roboterarm ohne weiteres Absetzen des Messfingers und Austausch des Werkzeuges vollumfänglich zu nutzen.

Ein weiterer Bestandteil der Erfindung ist eine Roboteranordnung mit einem Roboterarm mit den Merkmalen des Patentanspruchs 7. Die Roboteranordnung nach Patenanspruch 7 weist einen Roboterarm auf, der wiederum mindestens einen Antriebsmotor umfasst. Es liegt eine Robotersteuerung vor und ein Referenzobjekt, das in Reichweite des Roboterarms positionierbar ist. Die Erfindung zeichnet sich dadurch aus, dass am Roboterarm ein Messfinger angeordnet ist und dass eine Motorstrommessvorrichtung vorgesehen ist, in der ein Motorstromschwellwert hinterlegt ist, wobei die Position des Roboterarms bei einer Berührung des Messfingers und des Referenzobjektes bei gleichzeitiger Überschreitung des Schwellwertes des Motorstroms einen Nullpunkt eines Koordinatensystems für die Bewegung des Roboterarms darstellt.

Die Roboteranordnung gemäß Anspruch 7 weist dabei dieselben Vorteile gegenüber dem Stand der Technik auf, die bereits zum Verfahrensanspruch 1 erläutert sind. Es lässt sich somit durch technisch wenig aufwändige Mittel, nämlich der Messung des Motorstroms, die dies in der Regel durch die Robotersteuerung ohnehin erfolgt, jederzeit wiederholen. Die Positionierung des Roboterarms ist anhand des festgelegten Koordinatensystems genau bekannt und eine Nachkalibrierung ist mit wenig Aufwand möglich. Es ist dabei anzumerken, dass der Schwellwert in der Robotersteuerung hinterlegt ist. Das bedeutet, dass bei der Auswertung der Messwerte des Motorstromes dieser Schwellwert in Rechenalgorithmen verwendet wird. Die Hinterlegung des Schwellwertes muss nicht notwendigerweise in einem am Roboter direkt angeordneten Steuergerät hinterlegt sein. Bei ferngesteuerten Robotern kann dies auch in einer Zentrale bzw. sogar in einer Cloud-Anwendung hinterlegt sein.

In einer vorteilhaften Ausgestaltungsform der Roboterarmanordnung weisen die Geometrien des Referenzobjektes und des Messfingers jeweils zwei Referenzebenen auf. Ferner ist entweder der Messfinger oder das Referenzobjekt bezüglich einer Drehachse drehbar gelagert. Dadurch ist es möglich, dass bei einer formschlüssigen Berührung eines ersten Paares von Referenzebenen des Referenzobjektes und des Messfingers die formschlüssige Berührung eines zweiten Referenzebenenpaares zwangsläufig erfolgt. Auch die hierzu vorliegenden Vorteile gegenüber dem Stand der Technik sind bereits bezüglich des Patentanspruchs 2 erläutert.

Es ist dabei zweckmäßig, dass die Referenzebenen des Referenzobjektes und die Referenzebenen des Messfingers jeweils im selben Winkel zueinander stehen. Auf diese Weise können die beiden Ebenenpaare parallel aneinander anliegend ineinander gefahren bzw. ineinander gedreht werden.

Der Winkel, den die beiden Referenzebenen des Referenzobjektes oder des Messfingers zueinander einnehmen, liegt bevorzugt zwischen 70° und 130°. Besonders bevorzugt liegt er zwischen 80 und 100°, und ganz besonders bevorzugt liegt der Winkel im Wesentlichen bei 90°.

In einer weiteren vorteilhaften Ausgestaltungsform der Erfindung zeichnet sich die Roboteranordnung dadurch aus, dass ein zweiter Roboterarm vorgesehen ist, an dem das Referenzobjekt angeordnet ist. Wie bereits erläutert, dient diese Anordnung dazu, die Positionierung der beiden Roboterarme zueinander zu kalibrieren.

Weitere Ausgestaltungsformen und weitere Merkmale der Erfindung werden anhand der folgenden Figuren näher erläutert. Dabei handelt es sich um rein exemplarische Ausgestaltungsformen, die keine Einschränkung des Schutzbereiches darstellen. Merkmale mit denselben Bezeichnungen, aber in unterschiedlicher Ausgestaltungsform werden dabei mit denselben Bezugszeichen versehen.

Dabei zeigen:
- Figur 1: eine schematische Darstellung der Roboteranordnung mit einem Roboterarm, einem Messfinger und einem Referenzobjekt,
- Figur 2: die genauere Darstellung des Referenzobjektes und des Messfingers in dreidimensionaler Form,
- Figur 3: einen Querschnitt durch den Messfinger und das Referenzobjekt in einer Annäherungsphase in drei Stufen,
- Figur 4: ein Strom-Zeitdiagramm, in dem der Verlauf des Motorstroms als Funktion der Zeit dargestellt ist,
- Figur 5: eine Roboteranordnung analog zu Figur 1 mit zwei Roboterarmen.

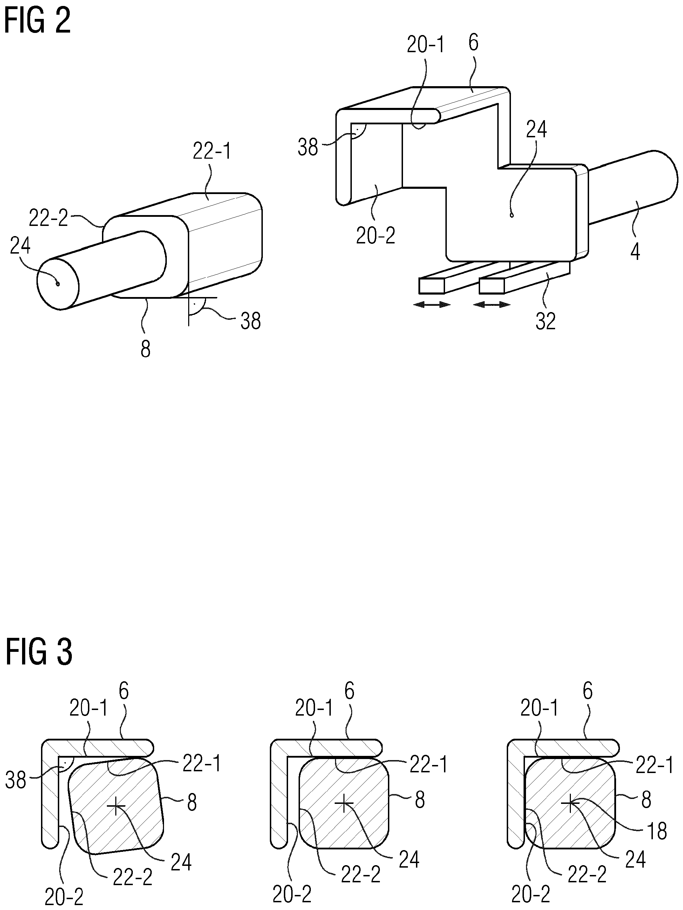

In Figur 2 ist eine Roboteranordnung 2 dargestellt, die einen Roboterarm 4 sowie eine Robotersteuerung 34 aufweist. Der Roboterarm 4 umfasst dabei mindestens einen, in der Regel eine Mehrzahl von Antriebsmotoren 10. Die Antriebsmotoren 10 sind dazu geeignet, den Roboterarm 4 entsprechend zu bewegen und Drehbewegungen sowie translatorische Bewegungen vorzunehmen. Am Roboterarm 4 ist, bevorzugt an einem Endbereich des Roboterarms 4, nämlich in dem Bereich, in dem auch ein Werkzeug 32 angeordnet ist, ein Messfinger 6 befestigt. Der Messfinger 6 ist am Roboterarm 4 insbesondere so angebracht, dass die Arbeit des Werkzeuges 32 nicht behindert wird. Ferner ist hier exemplarisch an einem Werktisch 40 ein Referenzobjekt 8 angeordnet, das mit dem Messfinger 6 aneinandergeführt werden kann. Ferner ist rein beispielhaft auf dem Werktisch 40 ein Werkstück 42 positioniert.

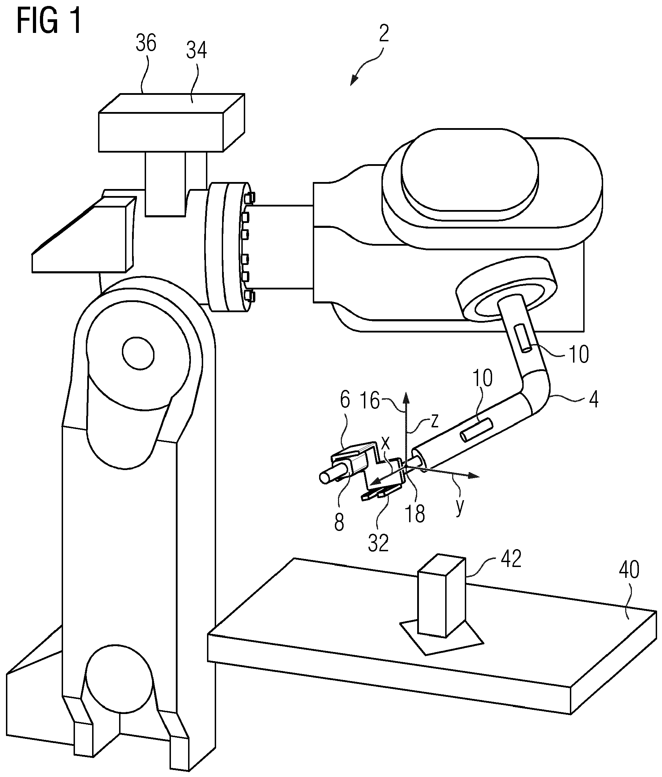

Wie zu Figur 2 noch näher erläutert werden wird, wird die Geometrie des Messfingers 6 mit der Geometrie des Referenzobjektes 8 in eine räumliche Übereinstimmung gebracht, wobei bei dieser Positionierung des Roboterarms 4 ein Nullpunkt für ein Koordinatensystem 16 bestimmt wird. Das Koordinatensystem 16 ist dabei rein exemplarisch in Figur 1 mit seinem Nullpunkt an einem Punkt gesetzt, der das Ende des Roboterarmes 4 und den Ansatz des Werkzeuges 32 beschreibt. Dabei ist es unerheblich, wo der Nullpunkt 18 bezüglich des Roboterarmes gesetzt wird. Er kann auch an einer bestimmten definierten Stelle des Messfingers 6 angebracht sein. Wichtig ist, dass durch die Lage des Nullpunktes und des Koordinatensystems auf die genaue Position des Roboterarmes und dessen Drehstellung rückgeschlossen werden kann. Dies ist dann möglich, wenn für die Steuerung 34 bzw. für eine Auswerteeinheit im Allgemeinen festgelegt ist, an welchem definierten Punkt an oder bezüglich des Roboterarmes der Nullpunkt des Koordinatensystems liegt und dass dieser während eines weiteren Roboterbetriebs unverändert ist.

In Figur 2 ist eine detailliertere, aber ebenfalls exemplarische Darstellung der Kombination aus dem Messfinger 6 und dem Referenzobjekt 8 gegeben. Dabei weist der Referenzfinger 6 zwei Referenzebenen 20-1 und 20-2 auf, die in Form eines Winkels 38 zueinander stehen. Der Winkel 38 ist in diesem Beispiel genau 90°. Es kann zweckmäßig sein, den Winkel 38 auch anders zu gestalten, er liegt dabei bevorzugt zwischen 70° und 130°. Der Messfinger 6 ist in der Regel an einem Ende des Roboterarms 4 angeordnet, ferner sind schematisch zwei bewegliche Krallen dargestellt, die ein Werkzeug 32, das nicht näher beschrieben wird, veranschaulichen sollen.

Im Weiteren ist das Referenzobjekt 8 vorgesehen, das ebenfalls zwei Referenzebenen 22-1 und 22-2 aufweist, die in die Referenzebenen 20-1 und 20-2 des Messfingers 6 in räumliche Übereinstimmung gebracht werden können. Dies ist in Figur 3 näher erläutert. In dem Beispiel gemäß Figur 2 sind die Ebenen 20-1 und 20-2 des Messfingers in Form eines Winkels ausgestaltet, wohingegen die Ebenen 22-1 und 22-2 des Referenzobjektes als Teil eines Vollkörpers ausgestaltet sind. Dabei handelt es sich um rein exemplarische Geometrien. Dies kann bezüglich Referenzobjekt 8 und Messfinger 6 auch genauso gut umgekehrt sein. Ferner ist in Figur 2 eine Drehachse am Messfinger 6 bzw. am Roboterarm 4 vorgesehen. Diese dient dazu, wie in Figur 3 noch erläutert wird, die beiden Objekte 6 und 8 ineinander zu führen. Diese Drehachse 24 kann sowohl am Roboterarm 4 also am Messfinger 6 als auch am Referenzobjekt 8 vorgesehen sein. Es ist dabei weniger zweckmäßig, beide Objekte 6, 8 mit einer Drehachse 24 auszugestalten, da so die genaue Bestimmung der Drehposition möglicherweise erschwert wird.

In Figur 3 ist ein Querschnitt durch den Messfinger 6 und das Referenzobjekt 8 gegeben, wobei sich beide Objekte 6, 8 in einer Annäherungsphase befinden. Zunächst wird die Ebene 22-1 des Referenzobjektes 8 mit der Ebene 20-1 des Messfingers 6 in Berührung gebracht. Dabei sind die beiden beschriebenen Referenzebenen, die in dieser Bezeichnung ein Referenzebenenpaar bilden, in Figur 3a noch nicht parallel zusammengeführt. Dies erfolgt erst durch eine Drehbewegung des Referenzobjektes 8 entlang der Drehachse 24. Dies ist in Figur 3b dargestellt. Durch eine weitere Verschiebung des Roboterarmes 4 wird der Messfinger 6 so weiterbewegt, dass ein weiterer Kontakt zwischen dem zweiten Referenzebenenpaar, nämlich der Ebene 20-2 und 22-2, ebenfalls erfolgt. Nun liegen die beschriebenen Referenzebenenpaare im richtigen Winkel parallel zueinander. In dieser Position, die in Figur 3c dargestellt ist, kann nun bei einer genau bekannten Position des Referenzobjektes 8 auf eine genaue Position des Roboterarmes 4 geschlossen werden. Nun ist es möglich, an einer definierten Stelle des Roboterarmes 4 ein Koordinatensystem zu bestimmen, dessen Nullpunkt nun genau bekannt ist oder der in genauer Kenntnis der nun bekannten Position des Roboterarms 4 beliebig in Relation zu diesem gesetzt werden kann.

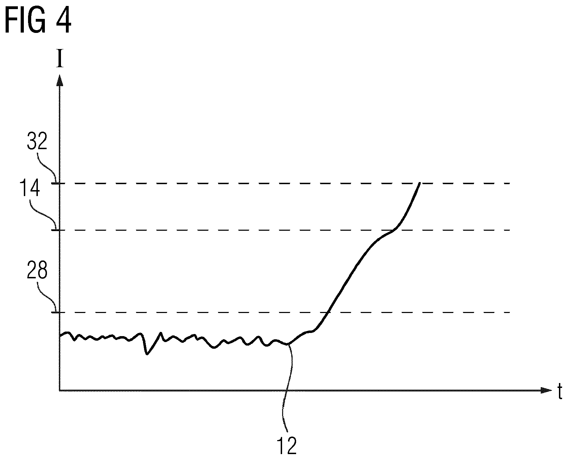

Das beschriebene Prinzip zum Kalibrieren der Position des Roboterarmes 4 und dessen Drehposition basiert darauf, dass ein Elektromotor unter Last mehr Strom zieht als ohne Last. Fährt man, wie beschrieben, einen Roboterarm auf einen Anschlag, analog Figur 3, so erhöht sich einer oder mehrere der Motorströme von Antriebsmotoren 10 des Roboterarms 4. In Figur 4 ist ein Zeit-Strom-Diagramm aufgezeigt, das den Verlauf des Motorstromes 12 eines Antriebsmotors 10 exemplarisch darstellt. Es ist dabei ein Schwellenwert 14 festgelegt, bei dessen Überschreiten von einer Berührung zwischen zwei Objekten, nämlich zwischen dem Messfinger 6 und dem Referenzobjekt 8, auszugehen ist. Ferner sind in Figur 4 noch ein zweiter Schwellenwert 28 und ein dritter Schwellenwert 32 eingezeichnet.

In einer Annäherungsphase zwischen dem Messfinger 6 und dem Referenzobjekt 8 wird der Motorstrom 12 so gewählt, dass er unter einem Schwellenwert 28 liegt. Dies entspricht einem vorsichtigen, langsamen Anfahren, sodass eine Berührung der beiden Objekte 6, 8 nicht zu einer spontanen Beschädigung des Antriebsmotors 10 bzw. des Roboterarmes 4 führt. Wird der Schwellenwert 28 überschritten, kann von einer ersten Berührung zwischen den Objekten 6 und 8 ausgegangen werden. Der Motorstrom 12 steigt relativ steil an, bis er den Schwellenwert 14 erreicht. Dies entspricht in etwa dem Übergang der Position in Figur 3a auf 3b. Der dritte Schwellenwert 32 ist ein Sicherheitsschwellenwert, der dazu dient, Beschädigungen des Antriebsmotors 10 und/oder des Roboterarmes 4 in mechanischer Form zu verhindern. Der Antriebsmotor 10 wird bei Erreichen des Schwellenwertes 32 abgeschaltet. Der Schwellenwert 14 ist in dieser Darstellung in Form eines festen Schwellenwertes dargestellt. Grundsätzlich könnte auch die Rampe zwischen Ansteigen des Motorstromes 12 bis zum Erreichen des Schwellenwertes 14 und dessen Verlauf bzw. dessen Steigung als Maß für das Erreichen einer bestimmten Position herangezogen werden.

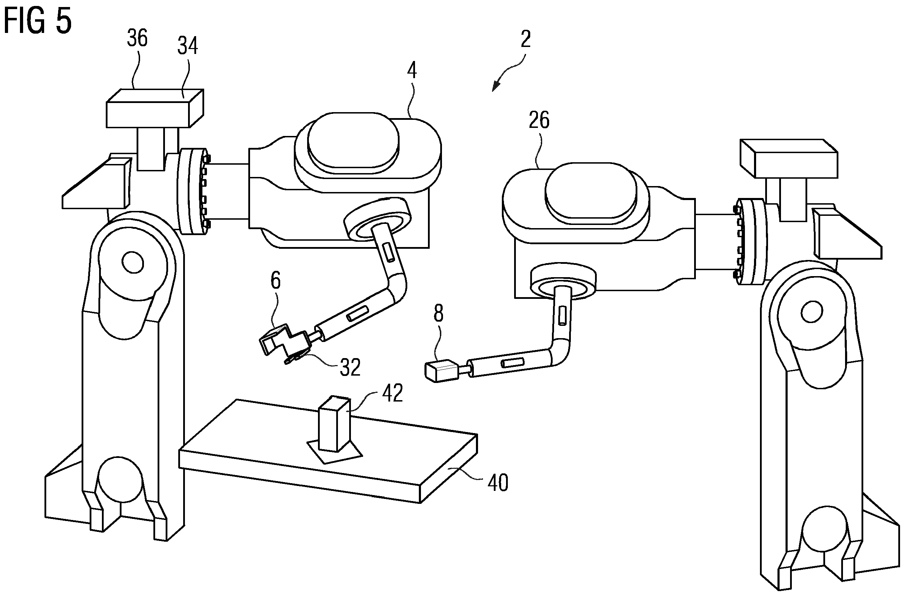

Handelsübliche NC-Steuerungen für Roboter erlauben nicht nur, maximale Ströme für die Antriebsmotoren 10 einzustellen, sondern auch die aktuellen Motorströme 12 und Motormomente zu messen (Motormomente lassen sich aus den Motorströmen 12 ermitteln) und diese Werte in situ, also während des Verfahrens, weiter zu verarbeiten und darauf steuerungstechnisch zu reagieren. Die Latenzzeit für die Reaktion auf ein Motormoment oder ein Motorstromsignal liegt beispielsweise zwischen 2 ms und 8 ms. Dieser Wert ist festgelegt und somit bekannt und kann bei Berechnung der Bahn des Roboterarmes 4 bzw. dessen Geschwindigkeitsverlaufes für die Messfahrt mit einbezogen werden. Um einen Roboterarm 4 mit einem zweiten Roboterarm 26 abzugleichen, ist es zweckmäßig, wie in Figur 5 dargestellt, das Referenzobjekt 8 am Roboterarm 26, also dem zweiten Roboterarm, anzuordnen. Hierbei wird zur Bestimmung der Positionen der beiden Roboterarme 4 und 26 dieselbe Prozedur vollzogen, wie sie bezüglich der Figuren 2, 3 und Figur 4 näher erläutert ist. Somit ist es möglich, die komplexe Positionierungssituation zwischen zwei unabhängig voneinander agierenden Roboterarmen 4, 26 genau zu kalibrieren und die Übergabe von Werkstücken zwischen den beiden Roboterarmen 4 und 26 mit einer hohen Genauigkeit festzulegen.

Die beschriebene Technologie weist dabei gegenüber dem Stand der Technik insbesondere die Vorteile auf, dass auf verhältnismäßig teure und fehleranfällige Sensoren, insbesondere optische oder mechanische Sensoren, verzichtet werden kann. Die Positionierung des Roboterarmes kann in regelmäßigen Abständen in sehr kurzer Zeit durch das beschriebene Kalibrierungsverfahren mit der beschriebenen Roboteranordnung wiederholt werden, um ein möglichst hohes Maß an Genauigkeit und genauer Positionsbestimmung des Roboterarmes 4 bzw. des Roboterarmes 26 zu gewährleisten und aufrecht zu erhalten. Das beschriebene Verfahren ist sehr kostengünstig und jederzeit mit sehr geringem Aufwand wiederholbar.

### Bezugszeichenliste

- 2: Roboteranordnung
- 4: Roboterarm
- 6: Messfinger
- 8: Referenzobjekt
- 10: Antriebsmotor
- 12: Motorstrom
- 14: Schwellwert
- 16: Koordinatensystem
- 18: Nullpunkt
- 20-1, -2: Referenzebenen Messfinger
- 22-1, -2: Referenzebenen Referenzobjekt
- 24: Drehachse
- 26: zweiter Roboterarm
- 28: zweiter Schwellwert
- 30: dritter Schwellwert
- 32: Werkzeuge
- 34: Rotorsteuerung
- 36: Motorstrommessvorrichtung
- 38: Winkel Referenzebene
- 40: Werktisch
- 42: Werkstück
- I: Stromachse
- t: Zeitachse

## Patentansprüche

1. Verfahren zum Kalibrieren eines Roboterarms (4) umfassend folgende Schritte,
- Bewegen eines Roboterarms (4) mit einem Messfinger (6) an ein Referenzobjekt (8),
- Messen eines Motorstroms mindestens eines Antriebsmotors (10) des Roboterarms (4)
- Vergleich des Motostroms (12) mit einem Schwellwert (14)
- Festlegen eines Koordinatensystems (16) mit einem Nullpunkt (18) an einer Position des Roboterarms (4), wenn der Motorstrom (12) den Schwellwert (14) überschreitet.

2. Verfahren nach Anspruch 1, **dadurch gekennzeichnet, dass** die Geometrien des Referenzobjektes (8) und des Messfingers (6) so ausgestaltet sind, dass sie jeweils mindestens zwei Referenzebenen (20-1, 20-2, 22-1, 22-2) umfassen und der Messfinger (6) oder das Referenzobjekt (8) bezüglich einer Drehachse (24) drehbar gelagert sind, wodurch bei einer formschlüssigen Berührung eines ersten Paares von Referenzebenen (20-1, 22-1) des Messfingers (6) und des Referenzobjektes (8) eine Drehung des Messfingers (6) oder des Referenzobjekts (8) erfolgt, bis eine formschlüssige Berührung eines zweiten Referenzebenenpaares (20-2, 22-2) erfolgt ist.

3. Verfahren nach einem der vorhergehenden Ansprüche, **dadurch gekennzeichnet, dass** das Referenzobjekt (8) an einem zweiten Roboterarm (26) angeordnet wird.

4. Verfahren nach einem der vorhergehenden Ansprüche, **dadurch gekennzeichnet, dass** ein zweiter Schwellwert (28) des Motorstroms (12) definiert wird, der niedriger liegt als der erste Schwellwert (14) und der während einer Annäherungsphase des Messfingers (6) an das Referenzobjekt (8) unterschritten wird.

5. Verfahren nach einem der vorhergehenden Ansprüche, **dadurch gekennzeichnet, dass** ein dritter Schwellwert (30) definiert wird, der größer ist als der erste Schwellwert (14), mit dessen Erreichen ein Stopp des Antriebsmotors (10) verknüpft wird.

6. Verfahren nach einem der vorhergehenden Ansprüche, **dadurch gekennzeichnet, dass** der Messfinger (6) am Roboterarm (4) zusätzlich zu Werkzeugen (32) angeordnet ist.

7. Roboteranordnung mit einem Roboterarm (4), der wiederum mindestens einen Antriebsmotor (10) aufweist, einer Robotersteuerung (34) und einem Referenzobjekt (8), das in Reichweite des Roboterarms (4) positionierbar ist, **dadurch gekennzeichnet, dass** am Roboterarm (4) ein Messfinger (6) angeordnet ist und dass eine Motorstrommessvorrichtung (36) vorgesehen ist, in der ein Motorstrom-Schwellwert (14) hinterlegt ist, wobei die Position des Roboterarms (4) bei einer Berührung des Messfingers (6) und des Referenzobjektes (8) und bei gleichzeitiger Überschreitung des Schwellwertes (14) des Motorstroms (12), einen Nullpunkt (18) eines Koordinatensystems (16) für die Bewegung des Roboterarms (4) darstellt.

8. Roboteranordnung nach Anspruch 7, **dadurch gekennzeichnet, dass** die Geometrien des Referenzobjektes (8) und des Messfingers (6) so ausgestaltet sind, dass sie jeweils zwei Referenzebenen (20-1, 20-2, 22-1, 22-2) umfassen und der Messfinger (6) oder das Referenzobjekt (8) bezüglich einer Drehachse (24) drehbar gelagert sind, wodurch bei einer formschlüssigen Berührung eines ersten Paares von Referenzebenen (20-1, 22-1) des Referenzobjektes (8) und des Messfingers (6) die formschlüssige Berührung eines zweiten Referenzebenenpaares (20-2, 22-2) erfolgt.

9. Roboteranordnung nach einem der Ansprüche 7 oder 8, **dadurch gekennzeichnet, dass** die Referenzebenen (22-1, 22-2) des Referenzobjektes (8) und die Referenzebenen (20-1, 20-2) des Messfingers (6) jeweils im selben Winkel zueinander stehen.

10. Roboteranordnung nach Anspruch 9, **dadurch gekennzeichnet, dass** ein Winkel (38) zwischen 70° und 130° beträgt.

11. Roboteranordnung nach Anspruch 10, **dadurch gekennzeichnet, dass** der Winkel (38) zwischen 80° und 100° beträgt.

12. Roboteranordnung nach Anspruch 10, **dadurch gekennzeichnet, dass** der Winkel (38) 90° beträgt.

13. Roboteranordnung nach Anspruch 7 oder 8, **dadurch gekennzeichnet, dass** ein zweiter Roboterarm (26) vorgesehen ist, wobei das Referenzobjekt (8) am zweiten Roboterarm (26) angeordnet ist.

14. Roboterarm nach einem der Ansprüche 7 bis 9, **dadurch gekennzeichnet, dass** der Messfinger (6) am Roboterarm (4) zusätzlich zu anderen funktionalen Werkzeugen (32) angeordnet ist.
